# EUROPÄISCHE PATENTSCHRIFT

(11) **EP 2 532 611 B1**
(45) Veröffentlichungstag und Bekanntmachung des Hinweises auf die Patenterteilung: **24.07.2013**
(21) Anmeldenummer: 12168158.9
(22) Anmeldetag: 16.05.2012
(51) Int. Cl.: B65G 47/84, B67C 3/24

(54) **Greifvorrichtung für Güter**
Gripping device for goods
Dispositif de saisie de marchandises

(30) Priorität: 08.06.2011 DE 102011077167
(43) Veröffentlichungstag der Anmeldung: 12.12.2012
(73) Patentinhaber: Schaeffler Technologies AG & Co. KG, 91074 Herzogenaurach (DE)
(72) Erfinder: Schmid, Günter, 90475 Nürnberg (DE); Schüler, Ralf, 98530 Wichtshausen (DE)

(56) Entgegenhaltungen:
- EP-A1- 2 360 109
- EP-A2- 1 970 134
- DE-A1- 19 740 892

## Beschreibung

Die Erfindung betrifft einen Greifvorrichtung für Güter. Sollen Güter etwa in der Form von Flaschen, Behältnissen oder Containern beispieisweise gespült, befüllt und dann verschlossen werden, werden diese Schritte in aller Regel auf sogenannten Straßen ausgeführt. Dabei werden zur Durchführung einzelner Schritte im Produktionsablauf die jeweiligen Güter von Greifern umfasst, um dann nach Ausführung des jeweiligen Arbeitsschritts wieder auf die Straße gesetzt zu werden.

Derartige Greifer umfassen in der Regel nicht mehr als zwei Finger, zwischen denen das zu haltende bzw. zu greifende Gut aufgenommen wird. Handelt es sich um sogenannte passive Greifer, wird der zugreifende Gegenstand gegen die Finger des jeweiligen Greifers gedrückt, so dass diese sich öffnen und dann, wenn der Gegenstand seine Endlage zwischen den Fingern gefunden hat, sich diese beispielsweise durch eine während des Öffnens gespannte Feder wieder schließen. Soll der so gegriffene und zwischen den Fingern gehaltene Gegenstand wieder vom Greifer getrennt werden, weil etwa der nur im Greifer ausführbare Arbeitschritt beendet ist, wird auf den Gegenstand eine Kraft ausgeübt, unter der sich die Finger öffnen und den Gegenstand freigeben. Derartige Greifer sind etwa aus DE 102005002715 bekannt.

Um die erforderliche Kraft zum Aufnehmen und Freigeben der jeweiligen Gegenstände zu erzeugen, haben sich wie auch in DE 102005002715 sogenannte Einlauf- und Auslaufsterne durchgesetzt.

Wie leicht einzusehen ist, können passive Greifer nicht bei allen Gegenständen eingesetzt werden. So scheidet der Einsatz derartiger Greifer bei etwa labilen Gegenständen aus. Da passive Greifer allein durch den Körperkontakt zwischen dem jeweiligen Gegenstand und den jeweiligen Fingern geöffnet werden, kann es durch diesen Kontakt zu Oberflächenbeschädigungen an den entsprechenden Gegenständen kommen.

Diese Nachteile der passiven Greifer werden durch sogenannte aktive Greifer vermieden. Diese aktiven Greifen zeichnen sich dadurch aus, dass die Finger dieser Greifer durch den Einsatz einer Vorrichtung geöffnet bzw. wieder geschlossen werden.

In einem sehr einfachen Beispiel kann dies durch eine Kurvenscheibe oder Führung realisiert sein, in oder an welcher ein Hebel geführt ist, der entsprechend der jeweiligen Position zwischen Führung und Hebel einen mit dem Hebel verbundenen Greifer öffnet oder schließt. Derartige Anordnungen, die auch als Zwangsantriebe bezeichnet werden, sind etwa aus DE 3434009 bekannt. Diese Art des Antriebs an Greifern wird aber als nachteilig angesehen, weil durch die Kopplung zwischen Führung und Greifer umfangreiche Umbauarbeiten erforderlich sind, wenn beispielweise nicht nur ein Gegenstand einer feststehenden Größe ergriffen werden soll. Außerdem unterliegen Zwangsantriebe der vorstehenden Art einem ständigen Verschleiß, weil die die Greifer betätigenden Hebel mit den entsprechenden Kurvenscheiben bzw. Führungen in ständigem körperlichen Kontakt stehen.

Neben dem Zwangsantrieb der Greifer sind aber auch aktive Greifer bekannt, die über einen Elektromotor zur Ansteuerung der Finger verfügen und es somit erlauben, die Greifer entsprechend von Vorgaben zu öffnen und zu schließen. Nur der Vollständigkeit halber sei darauf hingewiesen, dass -wie beispielsweise in DE 202007018269 ausgeführt- auch zur Ansteuerung der Finger der Greifer auch pneumatische oder hydraulische Antriebe eingesetzt werden. Wie leicht einzusehen ist, sind derartige Antriebe sehr aufwendig, weil jeder der Greifer mit einem entsprechenden Antrieb ausgestattet sein muss. Neben dem apparativen Aufwand sind derartige Antriebe aber auch in der Wartung aufwendig, da sichergestellt werden muss, dass eine Vielzahl von drehenden Teilen innerhalb der Wartungsintervalle ausfalllos funktionieren.

Im Zusammenhang mit der aktiven Ansteuerung von Greifern ist aus EP 1970134, welche auch den nächsten Stand der Technik bildet, eine Greifvorrichtung für Güter gemäβ dem Oberbegriff des Anspruchs 1 bekannt, bei welcher die beiden, einen Greifer bildenden Greiffinger, die von zwei Magneten zusammengehalten werden, von einem Antrieb aus zwei magnetischen Teilen gegen die von den Magneten bereitgestellte Zuhaltekraft angetrieben werden, indem diese zur Bewegung des oder der Greiffinger aneinander vorbeiführt werden.

Daher liegt der Erfindung die Aufgabe zugrunde, einen Antrieb für einen aktiven Greifer anzugeben, der die Nachteile der bekannten Antriebe vermeidet.

### Darstellung der Erfindung

Diese Aufgabe wird mit den in Anspruch 1 angegebenen Merkmalen gelöst. Vorteilhafte Aus- und Weiterbildungen sind den Ansprüchen 2 bis 4 entnehmbar.

Wird entsprechend Anspruch 1 das erste Teil von einem ersten Magnetsystem gebildet, welches von einem Joch und wenigstens einer bestrombaren Spule gebildet ist, ist das zweite Teil ein Permanentmagnet und wirkt der Antrieb derart auf den oder die Greiffinger, dass er die Greiffinger entgegen der Wirkung der Feder auseinander drückt oder gegeneinander presst, ist eine Anordnung geschaffen, mit welcher in sehr einfacher Weise unterschiedlich lange Schließ- und Öffnungszeiten der Greifer realisiert werden können. Ähnlich wie bei Greifern, die von Elektro- oder Hydraulikmotoren angetrieben werden, lässt sich mit dem erfindungsgemäßen Greiferantrieb durch eine schaltbare Bestromung der Spule oder Spulen eine schlagartige und punktgenaue Wirkung der Anziehungs- bzw. Abstoßungskraft bzw. ein Öffnen oder Schließen der Greifer herbeiführen, ohne dass dafür ein hoher Aufwand, etwa durch drehende und daher verschleißanfällige Teile getrieben werden muß.

Ist gemäß Anspruch 2 das Magnetsystem ortsfest angeordnet und wirkt das zweite Teil auf den oder die beweglichen Greiffinger, ist die Kontaktierung weiter vereinfacht, wenn der zweite Teil an dem Magnetsystem vorbeigeführt wird.

Ist gemäß Anspruch 3 dem Magnetsystem mindestens ein weiteres Magnetsystem nebengeordnet, lassen sich mit Einzelmodulen auch größere Strecken ausbilden, die den jeweiligen Greifer entweder offen oder geschlossen halten.

Ist gemäß Anspruch 4 eine Steuer- und Regelvorrichtung vorhanden, welche die Bestromung der Spule oder der Spulen aktiviert/deaktiviert und/oder die Drehgeschwindigkeit (in Pfeilrichtung P2) einregelt, mit welcher die beiden Teile aneinander vorbeigeführt werden, lassen sich die Greifer ohne großen Aufwand kontrolliert öffnen oder schließen.

### Kurze Darstellung der Figuren

Es zeigen:
- Fig. 1: einen Greifer;
- Fig. 2: einen weiteren Greifer;
- Fig. 3a, b, c: einen Öffnungs- und Schließzyklus für einen Greifer;
- Fig. 4: eine weitere Ausführung gemäß Fig. 3b;
- Fig. 5: eine Draufsicht auf eine Greiferanordnung;
- Fig. 6a: Schnitt durch ein Magnetsystem; und
- Fig.6b: einen Schnitt AA gemäß Fig. 6a

### Wege zum Ausführen der Erfindung

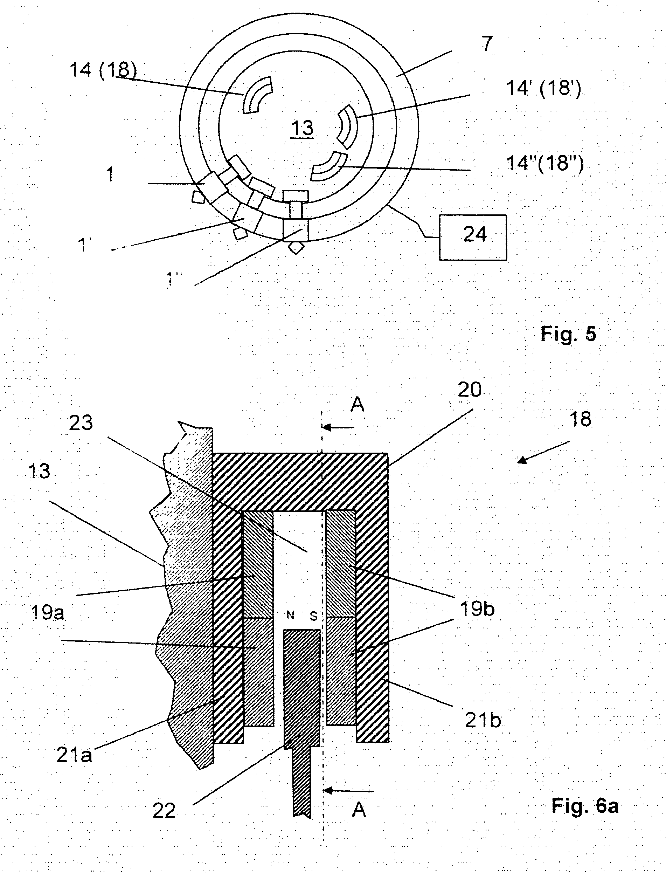

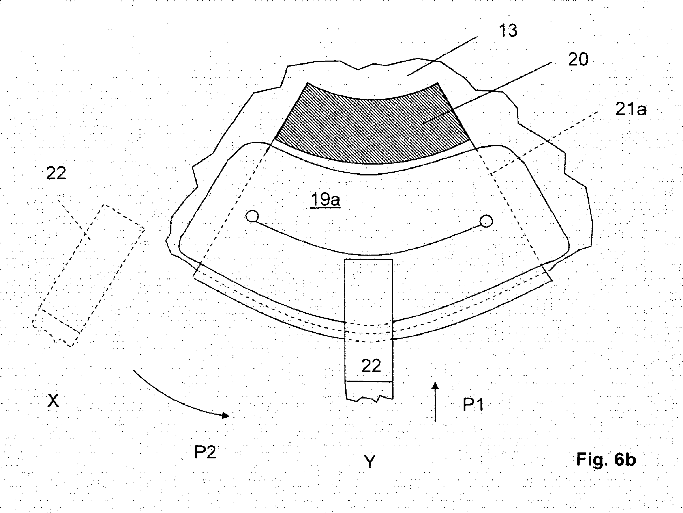

Die Erfindung soll nun anhand der Figuren näher erläutert werden, wobei lediglich die Fig. 6a und 6b ein erfindungsgemäßes System zu Gegenstand hat.

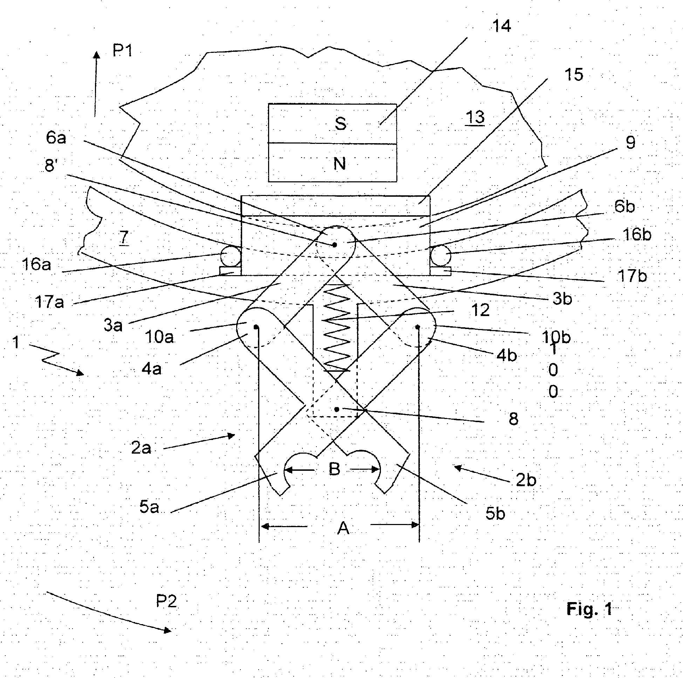

In Figur 1 ist eine Greifer 1 gezeigt, welcher im Wesentlichen von zwei Greiffingern 2a, 2b und zwei Hebeln 3a, 3b gebildet wird.

Beide Greiffinger 2a, 2b, welche im Wesentlichen L-förmig ausgebildet sind, wobei mit Blickrichtung auf die Fig. 1 der linke Greiffinger 2a spiegelverkehrt zum rechten Greiffinger 2b angeordnet ist. Beide Greiffinger 2a, 2b sind etwa mittig zwischen ihren ersten und zweiten Enden 4a, 4b; 5a, 5b mit einer Kreisringscheibe 7 mittels einer gemeinsamen Schraube 8 drehbar verbunden.

Die ersten Enden 6a, 6b der beiden Hebel 3a, 3b sind ebenfalls mittels einer gemeinsamen Schraube 8' drehbar mit einer Platte 9 verbunden, welche ihrerseits verschiebbar auf einer Kreisringscheibe 7 angeordnet ist. Außerdem sind die zweiten Enden 10a, 10b der beiden Hebel 3a, 3b mit den ersten Enden 4a, 4b der Greiffinger 2a, 2b an den Drehpunkten 11a, 11 b miteinander drehbar verbunden.

Wird nun zu einem Zeitpunkt T1 eine Kraft in Pfeilrichtung P1 auf die Platte 9 ausgeübt, wird eine zwischen den Hebeln 3a, 3b und den Greiffingern 2a, 2b angeordnete Feder 12 auseinandergezogen und der gegenseitige Abstand A zwischen den Drehpunkten 11a, 11 b verringert, vergrößert sich gleichzeitig der gegenseitige Abstand B zwischen den zweiten Enden 5a, 5b der Greiffinger 2a, 2b, so dass in diesem so vergrößerten Abstand B ein Gegenstand (nicht dargestellt) zwischen ihnen platziert werden kann.

Wirkt dann zu einem Zeitpunkt T2 die Kraft in Pfeilrichtung P1 nicht mehr auf die Platte 9, zieht sich die Feder 12 wieder zusammen und der Abstand A zwischen den Drehpunkten 11a, 11 b vergrößert sich. Mit dieser Vergrößerung des Abstands A wird auch der Abstand B zwischen den zweiten Enden 5a, 5b der Greiffinger 2a, 2b verringert und wieder auf ein Niveau zurückgeführt, welches vor Wirkung der Kraft in Pfeilrichtung P1 zwischen den Greiffingern 2a, 2b vorhanden war. Wurde zum Zeitpunkt T1 ein Gegenstand (nicht gezeigt) zwischen den geöffneten zweiten Enden 5a, 5b der Greiffinger 2a, 2b platziert, so wird dieser Gegenstand zum Zeitpunkt T2 zwischen den zweiten Enden 5a, 5b der Greiffinger 2a, 2b dank der Wirkung der Feder 12 gehalten. Für die Wirkung des später noch zu besprechenden Antriebs ist gleichgültig, ob nun ein zwischen den zweiten Enden 5a, 5b der Greiffinger 2a, 2b platzierter Gegenstand unter Wirkung einer vollkommen oder noch nicht vollkommen entspannten Feder 12 gehalten wird.

Soll nun ein zwischen den zweiten Enden 5a, 5b der beiden Greiffinger 2a, 2b gehaltener Gegenstand zu einem späteren Zeitpunkt T3 wieder freigeben werden, muss lediglich wieder eine schon bei der Aufnahme des Gegenstands wirkende Kraft in Pfeilrichtung P1 auf die Platte 9 einwirken.

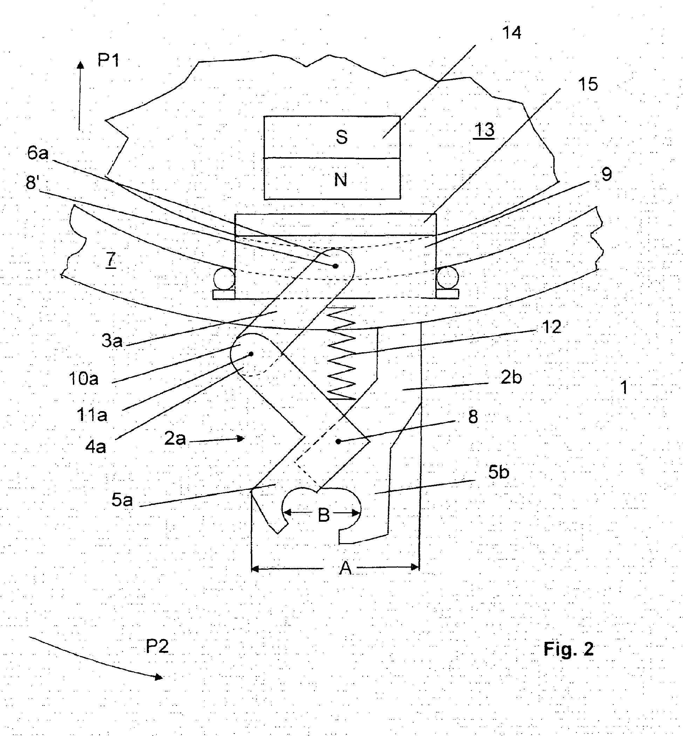

In Fig. 2 ist ein im Vergleich zur Ausführung gemäß Fig. 1 vereinfacht ausgebildeter Greifer 1 gezeigt. Dieser Greifer 1 wird lediglich von einem beweglichen Greiffinger 2a und einem mit der Kreisringscheibe 7 unbeweglich verbundenen Greiffinger 2b gebildet. Beide Greiffinger 2a, 2b sind auch in diesem Ausführungsbeispiel mit einer Schraube 8 verbunden, so dass der bewegliche Greiffinger 2a gegenüber dem unbeweglichen Greiffinger 2b verdreht werden kann. Ferner ist auch nur ein Hebel 3a vorhanden, dessen erstes Ende 6a mittels einer Schraube 8' drehbar mit der Platte 9 und dessen zweites Ende 10a am Drehpunkt 11 a mit dem ersten Ende 4a des Greiffingers 2a ebenfalls drehbar verbunden ist. Wie der Fig. 2 deutlich entnehmbar ist, wirkt die Feder 12 auch nur zwischen dem Hebel 3a und dem Greiffinger 2a.

Wird nun auf die Platte 9 eine Kraft in Pfeilrichtung P1 aufgeübt, bewegen sich der Hebel 3a und mit ihm das obere Ende 4a des beweglichen Greiffingers 2a ebenfalls in Pfeilrichtung P1. Da der bewegliche Greiffinger 2a drehbar über den feststehenden Greiffinger 2b mit der Kreisringscheibe 7 verbunden ist, wird durch die Bewegung in Pfeilrichtung P1 der Greifer 1 geöffnet, indem sich der Abstand B zwischen dem beweglichen und dem ortsfesten Greiffinger 2a, 2b vergrößert. Die Vergrößerung des Abstands B zwischen dem beweglichen und dem unbeweglichen Greiffinger 2a, 2b bewirkt gleichzeitig auch, dass die Feder 12 gespannt wird. Ist die Bewegung der Platte 9 in Pfeilrichtung P1 abgeschlossen, kann ein Gegenstand (nicht gezeigt) zwischen den Greiffingern 2a, 2b des geöffneten Greifers 1 platziert werden, welcher dann, wenn die Kraft in Pfeilrichtung P1 nicht mehr wirkt, dank der sich entspannenden Feder 12 zwischen den Greiffingern 2a, 2b gehalten wird.

Nur der Vollständigkeit halber sei darauf hingewiesen, dass in einem nicht näher dargestellten Ausführungsbeispiel die Feder 12 als Druckfeder ausgebildet sein kann. Diese Ausbildung bewirkt, dass bei dem in den Fig. 1 und 2 gezeigten Scherengelenken die unteren Enden 5a, 5b der Greiffinger 2a, 2b ohne Wirkung einer Kraft in Pfeilrichtung P1 ständig geöffnet sind. Will man bei einer solchen Ausbildung einen Gegenstand zwischen den unteren Enden 5a, 5b der Greiffinger 2a, 2b halten, muss sichergestellt werden, dass die in den Fig. 1 und 2 gezeigte Kraftwirkung entgegen der Pfeilrichtung P1 wirkt. Wie noch zu zeigen ist, lässt sich aber auch eine für diese Ausbildung notwendige Umkehr der Kraftwirkung mit dem Antrieb, auf den im Anschluss eingegangen wird, sehr einfach realisieren.

Um den Greifer 1 gemäß Fig. 1 zu öffnen, ist auf einer Unterlage 13 ein Permanentmagnet 14 ortsfest angeordnet. Ferner zeigt Fig. 1. einen Rand 15, der mit der Platte 9 verbunden ist und der aus einem ferromagnetischen Werkstoff hergestellt ist.

Außerdem sind in der Kreisringscheibe 7 zwei Stifte 16a, 16b vorgesehen, welche die Platte 9 führen und mittels von an der Platte 9 angebrachten Anschlägen 17a, 17b gleichzeitig deren Bewegung in Pfeilrichtung P 1 begrenzen.

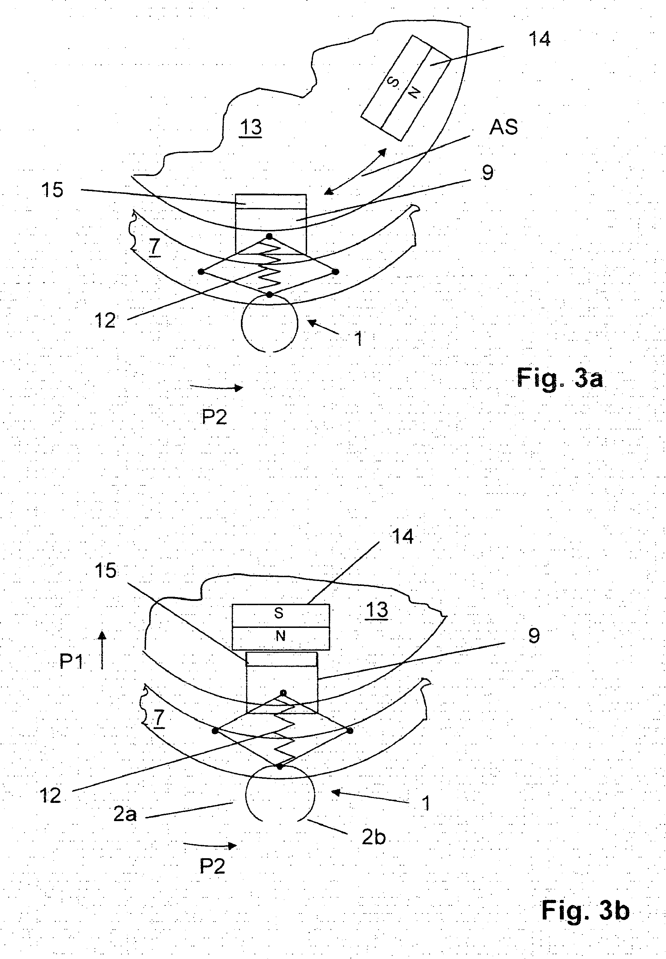

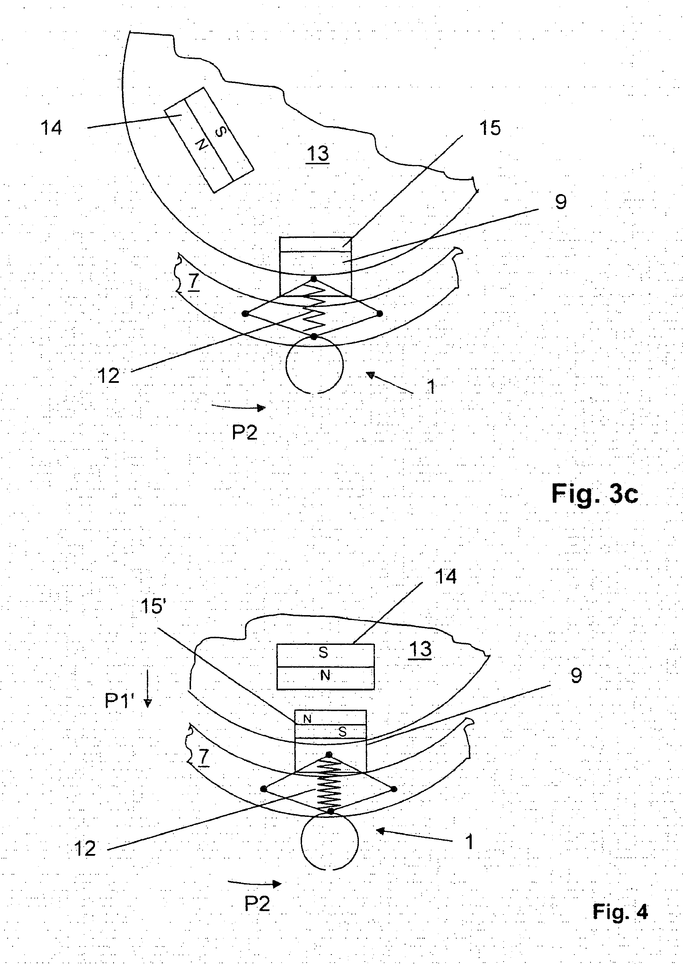

Wird nun ein auf einer Kreisringscheibe 7 angeordneter Greifer 1 gemäß Fig. 1 an einem auf der Unterlage 13 ortsfest angeordneten Permanentmagneten 14 in Pfeilrichtung P2 vorbeigeschwenkt, stellen sich Verhältnisse ein, die nun im Zusammenhang mit den Fig. 3a, b und c erläutert werden sollen.

In Fig. 3a sind Verhältnisse gezeigt, wo der auf der Kreisringscheibe 7 angeordnete Greifer 1 einen seitlichen Abstand AS zu dem auf der Unterlage 13 ortsfest angebrachten Permanentmagneten 14 einhält. Diese räumliche Distanz zwischen dem Permanentmagneten 14 und dem Rand 15 bewirkt, dass Feder 12 den Greifer 1 geschlossen hält.

Bewegt sich ausgehend von Fig. 3a die Kreisringscheibe 7 zusammen mit dem auf ihr angeordneten Greifer 1 in Pfeilrichtung P2 um die Unterlage 13 weiter, kommt der auf der Platte 9 angeordnete und aus einem ferromagnetischen Werkstoff gebildete Rand 15 in den Einfluss des vom Permanentmagneten 14 bereitgestellten Magnetfeldes und wird von diesem in Pfeilrichtung P1 angezogen. Diese Anziehung bewirkt, dass die Feder 12 auseinandergezogen und die Greiffinger 2a, 2b, des Greifer s1 geöffnet werden. Diese Verhältnisse sind in Fig. 3b gezeigt.

Rotiert der auf der Kreisringscheibe 7 angeordnete Greifer 1 weiter um die Unterlage 13 in Pfeilrichtung P2, verlässt der Rand 15 den Einflussbereich des auf Unterlage 13 ortsfest angeordneten Permanentmagneten 14. Dies hat zur Folge, dass die Feder 12 sich wieder zusammenziehen kann und sich der Greifer 1 wieder -wie in Fig. 3c gezeigt- schließt.

Wie leicht einzusehen ist, kann das im Zusammenhang mit den Fig. 1 und 3 gezeigte Ausführungsbeispiel auch ohne Einschränkung der Schließ- bzw. Öffnungsfunktion so modifiziert sein, dass der Permanentmagnet 14 und der Rand 15 gegeneinander vertauscht sind oder dass der Rand 15 ebenfalls als Permanentmagnet ausgebildet ist. Weisen die einander zugewandten Polflächen des ortsfest angeordneten Permanentmagneten 14 und des den Rand 15 ersetzenden Permanentmagneten unterschiedliche Polung auf, ändert sich nichts an den Gegebenheiten und Wirkungen, die im Zusammenhang mit den Fig.1, 2 und 3 erörtert wurden. Die gegenläufige Polung der dann beiden Permanentmagnete stellt im Vergleich zur Ausführung etwa gemäß Fig. 1 sicher, dass die Kraftwirkung in Pfeilrichtung P1 etwas stärker ausfällt.

Nur der Vollständigkeit halber sei darauf hingewiesen, dass die Erfindung nicht nur auf eine unterschiedliche Polung von Permanentmagneten beschränkt ist. In Fig. 4 ist ein Ausführungsbeispiel gezeigt, bei welchem die Platte 9 mit einem Rand 15' aus Permanentmagnetmaterial gebildet ist. Der Nordpol N des Randes 15' aus Permanentmagnetmaterial ist dem Nordpol N des ortsfest auf der Unterlage 13 angeordneten Permanentmagneten 14 zugewandt. Diese gegenseitige und durch den Pfeil P1' angedeutete Abstoßung wird im in Fig. 4 gezeigten Ausführungsbeispiel genutzt, um den Greifer 1 geschlossen zu halten, wenn die beiden Nordpole N -so wie in Fig. 4 gezeigt- einander gegenüberstehen. Tritt der Rand 15' aus Permanentmagnetmaterial aus dem Einfluss des Permanentmagneten 14 wieder heraus, indem sich der auf der Kreisringscheibe 7 angeordnete Greifer 1 in Pfeilrichtung P2 um die Unterlage 13 herum weiter gedreht hat, kann sich die unter der Abstoßung gemäß Fig. 4 zusammengedrückte Feder 12 wieder entspannen, was ein gleichzeitiges Öffnen des Greifers 1 zur Folge hat.

Auch ist die Erfindung nicht nur auf die Anordnung eines ortsfest auf der Unterlage 13 angeordneten Permanentmagneten 14 beschränkt. So können -wie in Fig. 5 schematisch gezeigt- auch eine Mehrzahl von Permanentmagneten 14, 14', 14" am Umfangrand der Unterlage 13 angebracht sein. Ferner ist Fig. 5 auch entnehmbar, dass auch nicht nur ein Greifer 1, sondern eine Mehrzahl von Greifern 1, 1', 1" auf der Kreisringsscheibe 7 angeordnet sein können.

In Fig. 6a ist ein Magnetsystem 18 im Schnitt gezeigt. Dieses Magnetsystem 18 wird im Wesentlichen von zwei Spulen 19a, 19b und einem u-förmigen Joch 20 gebildet. Das Joch 20 ist mit der Unterlage 13 ortsfest verbunden. An der Innenseite des ersten Schenkels 21 a des Jochs 20 ist eine erste Spule 19a und an der Innenseite des zweiten Schenkels 21 b des Jochs 20 ist eine zweite Spule 19b angebracht. Zwischen die beiden mit den Spulen 19a, 19b versehenen Schenkel 21 a, 21 b des u-förmigen Jochs 20 greift eine Zunge 22 ein, die aus einem dauermagnetischen Werkstoff hegerstellt ist und die mit wenigstens einem Greiffinger eines Greifer (alles in Fig. 6a nicht gezeigt) in Verbindung steht.

Zur Erzeugung eines Magnetfeldes zwischen den beiden Spulen 19a, 19b sind diese gegenläufig bestromt.

Taucht nun die Zunge 22 aus einem dauermagnetischen Werkstoff in den zwischen den Spulen 19a, 19b bzw. Schenkeln 21 a, 21 b gebildeten Luftspalt 23 ein, indem die Zunge 22 aus ihrer Ausgangsstellung X außerhalb des Magnetsystems 18 in Pfeilrichtung P2 gemäß Fig. 6b in das Magnetsystem 18 gedreht wird, wird die Zunge 22 aus dauermagnetischem Werkstoff in Pfeilrichtung P1 angezogen, wenn die beiden Spulen 19a, 19b bestromt sind. Eine innerhalb des Magnetsystems 18 angeordnete und von dem Magnetfeld zwischen den bestromten Spulen 19a, 19b bereits in Pfeilrichtung P1 bewegte Zunge 22 ist in Fig. 6b mit der Stellung Y der Zunge 22 veranschaulicht.

Wirkt das Magnetfeld nicht mehr, indem die Spulen 19a, 19b nicht mehr bestromt sind und/ oder sich die Zunge 22 bereits in Pfeilrichtung P2 wieder aus dem Luftspalt 23 entfernt hat, bewegt sich die Zunge 22 entgegen der Pfeilrichtung P1 zurück, wenn beispielsweise die Zunge 22 mit einem bereits in Fig. 1 näher erläuterten Greifer 1 bzw. dessen Platte 9 verbunden ist.

Nur der Vollständigkeit halber sei darauf hingewiesen, dass in einem nicht näher dargestellten Ausführungsbeispiel eine Anordnung gemäß den Figuren 6a und 6b -wie schon im Zusammenhang mit den Fig. 3a bis 3c erläutert- auch so modifiziert sein kann, dass bei bestromten Spulen 19a, 19b eine im Luftspalt 23 angeordnete Zunge 22 entgegen der Pfeilrichtung P1 bewegt wird und bei Verlassen des Magnetsystems 18 bzw. bei abgeschalteter Bestromung der Spulen 19a, 19b die Zunge 22 in Pfeilrichtung P1 wieder in ihre Ausgangsposition bewegt wird.

Wie schon im Zusammenhang mit Fig. 5 erläutert, können auch eine Mehrzahl von Greifern 1, 1', 1" auf der Kreisringscheibe 7 sowie eine Mehrzahl von Permanentmagneten 14, 14', 14" auf der Unterlage 13 angeordnet sein. Um das Öffnen und Schließen der Greifer 1, 1', 1" zu regeln, ist eine Steuer- und Regelvorrichtung 24 vorhanden, welche die Geschwindigkeit regelt , mit welcher sich die Kreisringscheibe 7 um die Unterlage in Pfeilrichtung P2 dreht.

Sind hingegen die Permanentmagnete 14 durch Magnetsysteme 18, 18' 18" ersetzt, über nimmt die Steuer- und Regelvorrichtung 24 zusätzlich auch noch die taktgenaue Bestromung der Spulen 19.a, 19b des oder der jeweiligen Magnetsysteme 18, 18' 18". Diese Verhältnisse sind in Fig. 5 nur angedeutet.

### Bezugszeichenliste

- 1, 1': Greifer
- 2a, b: Greiffinger
- 3a, b: Hebel
- 4a, b: erstes Ende
- 5a, b: zweites Ende
- 6a, b: erstes Ende
- 7: Kreisringscheibe
- 8, 8': Schraube
- 9: Platte
- 10a, b: zweites Ende
- 11 a, b: Drehpunkt
- 12: Feder
- 13: Unterlage
- 14: Permanentmagnet
- 15, 15': Rand
- 16a, b: Stifte
- 17a, b: Anschläge
- 18: Magnetsystem
- 19a,b: Spulen
- 20: Joch
- 21 a, b: Schenkel
- 22: Zunge
- 23: Luftspalt
- 24: Steuer- Regelvorrichtung

- P1, P1': Anziehungs-, Abstoßungskraft
- P2: Bewegungsrichtung
- A: Abstand Drehpunkte
- B: Abstand zweite Ende
- AS: seitlicher Abstand
- N, S: Pole von Permanentmagneten

## Patentansprüche

1. Greifvorrichtung für Güter
mit einem Greifer (1), der über wenigstens zwei Greiffinger (2a, 2b) verfügt, wobei wenigstens einer der Greiffinger (2a, 2b) beweglich angeordnet ist, und mit einem Antrieb, der wenigstens auf den oder die beweglichen Greiffinger (2a, 2b) wirkt,
mit einer Feder (12), welche die Greiffinger (2a, 2b) entweder gegeneinander presst oder auseinander drückt,
mit einem Antrieb, der von einem ersten Teil (18) und einem zweiten Teil (22) gebildet wird, wobei die beiden Teile (18,22) aneinander vorbeiführbar angeordnet sind, wobei einer der beiden Teile (18, 22) auf den oder die beweglichen Greiffinger (2a, 2b) wirkt, und wobei die beiden Teile (18, 22) aufeinander eine Anziehungs- und/oder eine Abstoßungskraft ausüben, wenn die beiden beiden Teile (18, 22) aneinander vorbeigeführt werden,
**dadurch gekennzeichnet,**
**dass** das erste Teil von einem ersten Magnetsystem (18) gebildet ist, welches von einem Joch (20) und wenigstens einer bestrombaren Spule (19a, 19b) gebildet ist, und
**dass** das zweite Teil (22) ein Permanentmagnet ist und
**dass** der Antrieb derart auf den oder die Greiffinger (2a, 2b) wirkt, dass er die Greiffinger (2a, 2b) entgegen der Wirkung der Feder auseinander drückt oder gegeneinander presst.

2. Greifvorrichtung nach Anspruch 1,
**dadurch gekennzeichnet,**
**dass** das Magnetsystem (18) ortsfest angeordnet ist,
**dass** der zweite Teil (22) auf den oder die beweglichen Greiffinger (2a, 2b) wirkt und
**dass** der zweite Teil (22) an dem Magnetsystem (18) vorbeigeführt wird.

3. Greifvorrichtung nach Anspruch 2,
**dadurch gekennzeichnet,**
**dass** wenigstens ein weiteres Magnetsystem (18') vorhanden ist, welches dem ersten Magnetsystem (18) nebengeordnet ist.

4. Greifvorrichtung nach einem der Ansprüche 1 bis 3,
**dadurch gekennzeichnet,**
**dass** eine Steuer- und Regelvorrichtung (24) vorhanden ist, welche die Bestromung der Spule oder der Spulen (18a, 18b) und/oder die Drehgeschwindigkeit regelt, mit welcher die beiden Teile (18, 22) aneinander vorbeigeführt werden.

## Claims

1. Gripping apparatus for gripping articles, having a gripper (1) which has at least two gripping fingers (2a, 2b), wherein at least one of the gripping fingers (2a, 2b) is arranged in a movable manner, and having a drive, which acts at least on the movable gripping finger or fingers (2a, 2b),
having a spring (12), which either presses the gripping fingers (2a, 2b) against one another or pushes them apart from one another,
having a drive, which is formed by a first part (18) and a second part (22), wherein the two parts (18, 22) are arranged such that they can be guided past one another, wherein one of the two parts (18, 22) acts on the movable gripping finger or gripping fingers (2a, 2b), and wherein the two parts (18, 22) exert an attraction force and/or a repulsion force on one another when the two parts (18, 22) are guided past one another
**characterized**
**in that** the first part is formed by a first magnet system (18), which is formed by a yoke (20) and at least one energizable coil (19a, 19b), and
**in that** the second part (22) is a permanent magnet, and in that the drive acts on the gripping finger or the gripping fingers (2a, 2b) such that it forces the gripping fingers (2a, 2b) apart from one another, or presses them against one another, counter to the action of the spring.

2. Gripping apparatus according to Claim 1,
**characterized**
**in that** the magnet system (18) is arranged in a fixed position,
**in that** the second part (22) acts on the movable gripping finger or gripping fingers (2a, 2b), and
**in that** the second part (22) is guided past the magnet system (18).

3. Gripping apparatus according to Claim 2,
**characterized**
**by** the presence of at least one further magnet system (18'), which is co-ordinated with the first magnet system (18).

4. Gripping apparatus according to one of Claims 1 to 3,
**characterized**
**by** the presence of a control and regulating means (24), which regulates the operation of energizing the coil or the coils (18a, 18b) and/or the rotational speed at which the two parts (18, 22) are guided past one another.

## Revendications

1. Dispositif de préhension de marchandises
comprenant un élément de préhension (1) qui possède au moins deux doigts de préhension (2a, 2b), au moins l'un des doigts de préhension (2a, 2b) étant disposé de manière mobile, et comprenant un entraînement qui agit au moins sur le ou les doigts de préhension mobiles (2a, 2b),
comprenant un ressort (12) qui soit presse les doigts de préhension (2a, 2b) l'un contre l'autre soit les pousse à l'écart l'un de l'autre,
comprenant un entraînement qui est formé par une première partie (18) et une deuxième partie (22), les deux parties (18, 22) étant disposées de manière à pouvoir être guidées l'une devant l'autre, l'une des deux parties (18, 22) agissant sur le ou les doigts de préhension mobiles (2a, 2b) et les deux parties (18, 22) exerçant l'une sur l'autre une force d'attraction et/ou de répulsion lorsque les deux parties (18, 22) sont guidées l'une devant l'autre,
**caractérisé**
**en ce que** la première partie est formée par un système magnétique (18) qui est formé par une culasse (20) et au moins une bobine (19a, 19b) pouvant être alimentée en courant électrique, et en ce que la deuxième partie (22) est un aimant permanent, et
**en ce que** l'entraînement agit sur le ou les doigts de préhension (2a, 2b) de telle sorte qu'il pousse les doigts de préhension (2a, 2b) à l'écart l'un de l'autre ou les presse l'un contre l'autre, à l'encontre de l'action du ressort.

2. Dispositif de préhension selon la revendication 1,
**caractérisé**
**en ce que** le système magnétique (18) est disposé de manière fixe,
**en ce que** la deuxième partie (22) agit sur le ou les doigts de préhension mobiles (2a, 2b) et
**en ce que** la deuxième partie (22) est guidée devant le système magnétique (18).

3. Dispositif de préhension selon la revendication 2,
**caractérisé**
**en ce qu'**au moins un système magnétique supplémentaire (18') est présent, lequel est coordonné avec le premier système magnétique (18).

4. Dispositif de préhension selon l'une quelconque des revendications 1 à 3,
**caractérisé**
**en ce qu'**un dispositif de commande et de régulation (24) est présent, lequel régule l'alimentation en courant électrique de la bobine ou des bobines (18a, 18b) et/ou la vitesse de rotation à laquelle les deux parties (18, 22) sont guidées l'une devant l'autre.
